# EUROPEAN PATENT APPLICATION

(11) **EP 4 825 621 A1**
(43) Date of publication of application: **21.10.2026**
(21) Application number: 26171183.2
(22) Date of filing: 08.04.2026
(51) Int. Cl.: B60J 10/74, B60J 10/60, B60J 10/273

(54) **SEALING STRIP ASSEMBLY HAVING HEATING SEAL STRIP**

(30) Priority: 09.04.2025 CN 202520664198 U
(71) Applicant: Henniges China Sealing Systems Co, Ltd, Beijing 100023 (CN); Henniges Taicang Sealing System Co, Ltd, Suzhou, Jiangsu Province 215434 (CN); Henniges Automotive Sealing System Tieling Co, Ltd., Tieling, Liaoning 112000 (CN); Henniges (Guiyang) Automotive Sealing System Co., Ltd., Guiyang city, Guizhou Province 550000 (CN)
(72) Inventor: YU, Xiaohua, 100023 Beijing (CN); XI, Haipo, 100023 Beijing (CN); YANG, Decai, 100023 Beijing (CN); YAN, Weitao, 100023 Beijing (CN); MA, Jinhui, 100023 Beijing (CN); FAN, Weichao, 100023 Beijing (CN); WANG, Shangang, 100023 Beijing (CN); ZHOU, Minchun, 100023 Beijing (CN); LI, Zhaochuan, 100023 Beijing (CN); ZENG, Weiming, 100023 Beijing (CN); ZHOU, Baoyu, 100023 Beijing (CN); GONG, Jian, 100023 Beijing (CN); LIANG, Jiangwei, 100023 Beijing (CN)
(74) Representative: McDonough, Jonathan

(57) **Abstract**

The present application relates to the technical field of vehicle components, and discloses a sealing strip assembly having a heating seal strip. The sealing strip assembly is applied to an automobile. In a preferred embodiment, the heating seal strip includes: a conductive polymer; two conductor wires provided at intervals inside the conductive polymer, with one end of each of the two conductor wires configured to be connected to a positive electrode and a negative electrode of a power supply, respectively; and an insulating layer configured to wrap the exterior of the conductive polymer.

## Description

### CROSS-REFERENCE TO RELATED APPLICATION

The subject patent application claims priority to Chinese Patent Application No. 202520664198.7, filed on April 9, 2025, the disclosure of which is incorporated by reference herein.

### TECHNICAL FIELD

The present application relates to the technical field of vehicle components, in particular a sealing strip assembly having a heating seal strip.

### BACKGROUND

The existing automotive seal strip products are generally required to reach a minimum service temperature of -40°C. Under extremely cold conditions, the side window glass of an automobile is highly susceptible to freezing, which may impede or even prevent the glass from being rolled up and down; automobile doors are also prone to freezing, resulting in difficulty in opening. Conventional solutions involve waiting for natural warming or using other heating methods to thaw the frozen glass or doors, which considerably compromises the usability of automobiles under extremely cold conditions.

### SUMMARY

In view of the above, the present application provides a heating seal strip to solve the problem of extreme inconvenience caused by the conventional methods for thawing the frozen glass or doors under extremely cold conditions.

In a first aspect, the present application provides a sealing strip assembly for automobiles, the sealing strip assembly includes: a sealing body, and a heating seal strip coupled to the sealing body, the heating seal strip includes: a conductive polymer, two conductor wires provided at intervals inside the conductive polymer, with one end of each of the two conductor wires configured to be connected to a positive electrode and a negative electrode of a power supply, respectively, and an insulating layer configured to wrap the exterior of the conductive polymer.

Beneficial effects: By adopting the above technical solution, the heating seal strip of the present application is endowed with a heating function by energizing the resistive conductive polymer, and realizes thawing by heating the areas prone to icing such as glass or doors, thereby achieving the deicing effect. Moreover, the heating seal strip of the present application generates heat by itself in the energized state, with uniform heating and a self-limiting temperature function. It maintains a constant temperature after being heated to a certain temperature, and can realize constant temperature heating without using a temperature controller and a temperature sensor, which is convenient to use and significantly reduces the cost.

Optionally, a resistance of the conductive polymer increases with a rise in temperature.

Optionally, the conductor wires are metal wires.

Optionally, the insulating layer is a rubber layer or an insulating coating.

Optionally, the conductive polymer, the two conductor wires and the insulating layer are of an integrally formed structure.

Optionally, the sealing strip assembly further includes: the power supply connected to one end of each of the two conductor wires; and a switch disposed between the power supply and the conductor wires, wherein the switch is configured to control energization of the two conductor wires.

In a second aspect, the sealing strip assembly includes: a sealing body defining a bulb, and a heating seal strip disposed within the bulb, the heating seal strip includes: a conductive polymer, and two conductor wires provided at intervals inside the conductive polymer, with an end of one of the two conductor wires configured to be connected to a positive electrode and an end of the other of the two conductor wires configured to be connected to a negative electrode of a power supply, and wherein the bulb acts as an insulating layer configured to enclose the conductive polymer.

In a third aspect, the sealing strip assembly includes: a sealing body, and a heating seal strip coupled to the sealing body configured to form a sealing lip, the heating seal strip includes: a conductive polymer, and two conductor wires provided at intervals inside the conductive polymer, with an end of one of the two conductor wires configured to be connected to a positive electrode and an end of the other of the two conductor wires configured to be connected to a negative electrode of a power supply.

### BRIEF DESCRIPTION OF THE DRAWINGS

In order to more clearly explain technical solutions in specific embodiments of the present application or in the prior art, the accompanying drawings that need to be used in the description of the specific embodiments or the prior art will be briefly introduced below. Apparently, the accompanying drawings described below only represent some embodiments of the present application. For those ordinarily skilled in the art, other drawings may also be obtained based on these accompanying drawings without expenditure of creative efforts.
FIG. 1 is a schematic principal view of a heating seal strip provided in the embodiment of the present application;
FIG. 2 is a schematic cross-sectional structure diagram of the heating seal strip provided in the embodiment of the present application;
FIG. 3 is a schematic view of the connection between the heating seal strip and a electronic control module provided in the embodiment of the present application;
FIG. 4 is a schematic cross-sectional structure diagram of the heating seal strip fixed on a sealing strip assembly provided in the embodiment of the present application;
FIG. 5 is a schematic cross-sectional structure diagram of the heating seal strip and the sealing strip assembly integrally arranged provided in the embodiment of the present application;
FIG. 6 is a schematic structural view of the heating seal strip arranged for use in a door sealing strip provided in the embodiment of the present application;
FIG. 7 is a schematic structural view of the heating seal strip arranged for use in a trunk sealing strip provided in the embodiment of the present application;
FIG. 8 is a schematic structural view of the heating seal strip arranged for use in a frameless door top strip and a door frame strip provided in the embodiment of the present application;
FIG. 9 is a first schematic structural view of the heating seal strip arranged for use in a frameless door pillar strip provided in the embodiment of the present application;
FIG. 10 is a second schematic structural view of the heating seal strip arranged for use in a frameless door pillar strip provided in the embodiment of the present application.

### Explanation of Reference Signs:

1. Conductive polymer; 2. Conductor wire; 3. Power supply; 4. Insulating layer; 5. Heating seal strip; 6. Sealing strip assembly; 7. Side window glass; 8. Electronic control module; 9. Sealing body; 10. Decorative trim member; 11. Bulb; 12. Sealing lip.

### DETAILED DESCRIPTION OF THE EMBODIMENTS

In order to make the purposes, technical solutions and advantages of the embodiments of the present application clearer, the technical solutions in the embodiments of the present application will be clearly and completely described below in conjunction with the accompanying drawings in the embodiments of the present application. Obviously, the described embodiments are part of the embodiments of the present application, rather than all the embodiments. Based on the embodiments in the present application, all other embodiments obtained by those skilled in the art without expenditure of creative efforts shall fall within the protection scope of the present application.

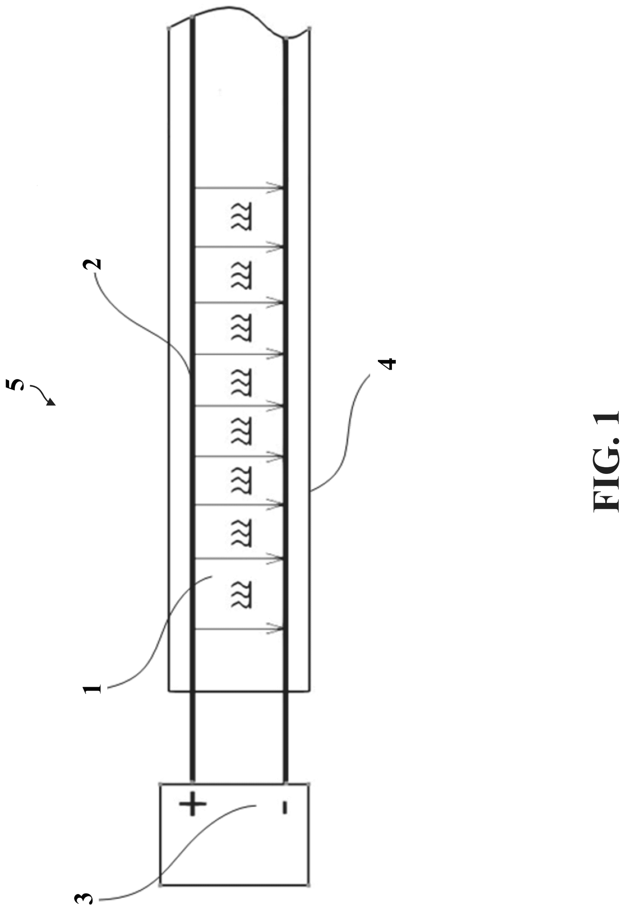

In a specific embodiment of a heating seal strip 5 as shown in FIGS. 1 to 2, it includes: a conductive polymer 1, two conductor wires 2 and an insulating layer 4. The heating of the heating seal strip 5 of the present application is not achieved by electric heating wires or heating sheets, instead, the heating seal strip 5 generates heat by itself when energized, featuring uniform heat emission and a self-temperature-limiting property. It maintains a constant temperature after being heated to a certain temperature, and can realize constant temperature heating without using a temperature controller and a temperature sensor. The heating seal strip 5 of the present application is applicable to automobiles, and the resistance of the conductive polymer 1 of the present application increases with a rise in temperature.

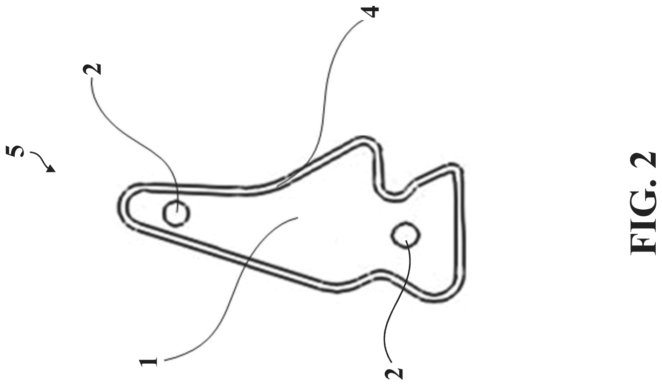

As shown in FIG. 2, the two conductor wires 2 are provided at intervals inside the conductive polymer 1; the insulating layer 4 is configured to wrap the exterior of the conductive polymer 1. As shown in FIG. 1, one end of each of the two conductor wires 2 are respectively configured to be connected to a positive electrode and a negative electrode of a power supply 3. The arrows in FIG. 1 indicate the direction of current, and the curved lines between the two conductor wires 2 represent the heating effect.

Specifically, the conductor wires 2 are preferably metal wires, and more specifically, the metal wires 2 are preferably nickel-plated copper wires; the conductive polymer 1 and the nickel-plated copper wires 2 are preferably manufactured by extrusion molding; after energization, the conductive polymer 1 between the two nickel-plated copper wires 2 acts as a resistor to form a current loop, thereby realizing uniform heating. The heating seal strip 5 of the present application has a self-limiting temperature function, adjusting the temperature by a controller is not required. Due to the inherent material properties of the conductive polymer 1 itself, when heated to a specific temperature, the resistance of the conductive polymer 1 increases, and heating stopping the heating process automatically. The material characteristic of the conductive polymer 1 itself is that the resistivity increases sharply with the rise in temperature. When the temperature of the conductive polymer 1 reaches a certain level, it will open the circuit to achieve the purpose of automatic temperature control. There is no need to set a thermocouple for control. Different temperature requirements for products can be met by selecting an appropriate material of the conductive polymer 1. The conductive polymer 1 has a good heat transfer performance.

The length of the heating seal strip 5 of the present application can be freely cut. Moreover, after cutting, only one end of each of the two conductor wires 2 needs to be connected to a power supply to generate heat normally. The other end of each of the two conductor wires 2 does not need special treatment, and the two conductor wires 2 do not need to be connected to form a closed circuit.

The insulating layer 4 is preferably a rubber layer or an insulating coating.

Further, the conductive polymer 1, the two conductor wires 2 and the insulating layer 4 of the present application are preferably of an integrally formed structure.

At an ambient temperature of 0°C, the heating temperature range of the heating seal strip 5 is preferably 10°C to 70°C; at an ambient temperature of 0°C, the output power range of each meter of the heating seal strip 5 is preferably 10W to 20W.

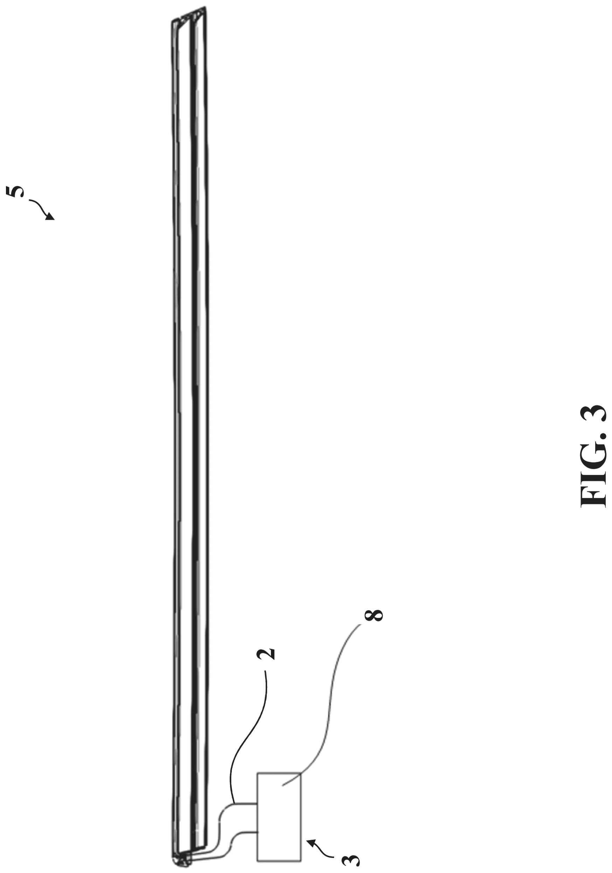

The sealing strip assembly of the present application further includes: the power supply 3 and a switch. As shown in FIG. 3, the power supply 3 and the switch form an electronic control module 8.

Referring to FIG. 1, the power supply 3 is connected to one end of each of the two conductor wires 2; the switch is disposed between the power supply 3 and the conductor wires 2. The switch is configured to control whether to energize the two conductor wires 2. There is no need to arrange a temperature sensor, and only two states of on and off need to be set through the switch. The voltage of the power supply 3 is preferably 12V or 24V.

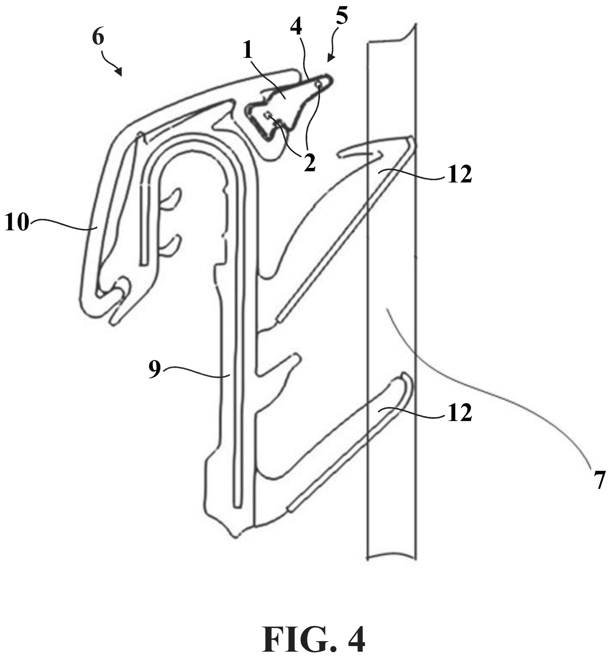

As shown in FIG. 4, in winter, the exterior of a side window glass 7 is easily frozen due to accumulated snow or accumulated water at low temperatures. After freezing, it is easy to cause the side window glass 7 to fail to operate normally or have difficulty in rolling up and down. Therefore, the heating seal strip 5 is preferably fixedly mounted on a sealing strip assembly 6 along a length direction, and heating and deicing are turned on, thereby solving the lifting problem of the side window glass 7. The sealing strip assembly 6 is also known as an outer waistline sealing strip 6 which defines a sealing body 9. In some embodiments, the outer waistline sealing strip 6 defines a decorative trim member 10 coupled to the sealing body 9. The heating seal strip 5 may be mounted to the decorative trim member 10 along the length direction.

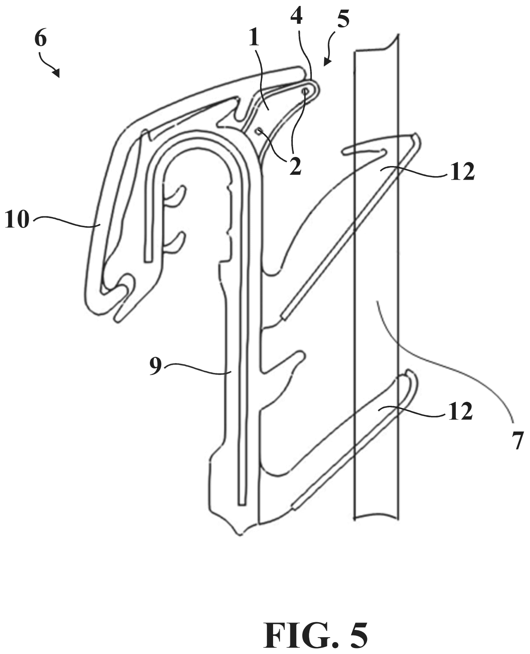

Alternatively, as shown in FIG. 5, the heating seal strip 5 and the sealing strip assembly 6 are of an integral structure along the length direction. The sealing strip assembly 6 is configured to seal the side window glass 7. In some embodiments, the sealing body 9 of the outer waistline sealing strip 6 defines at least one sealing lip 12 configured to abut the heating seal strip 5 when configured to seal a side window glass 7.

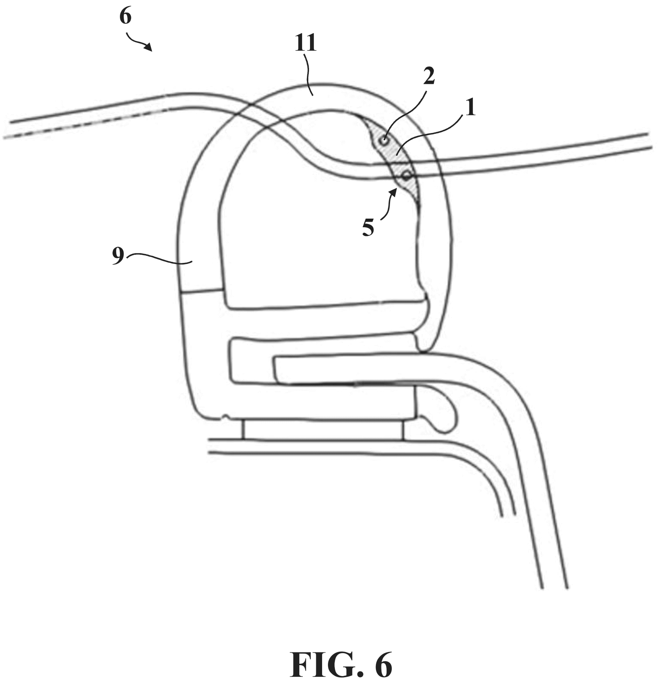

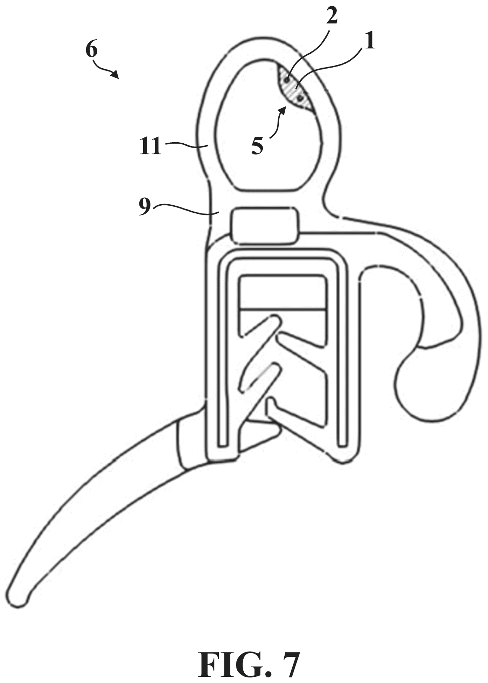

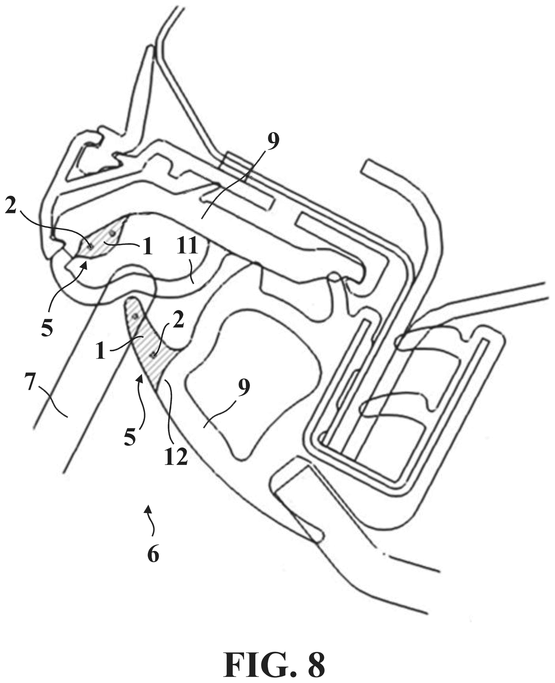

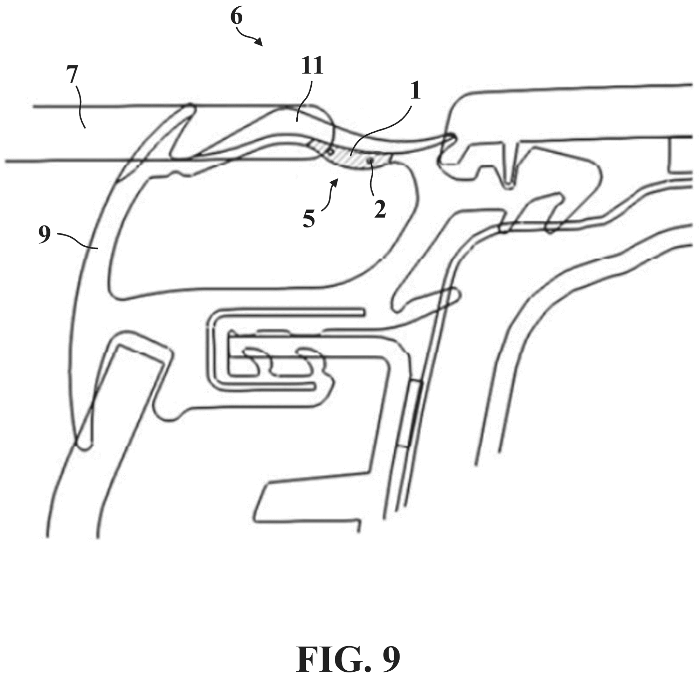

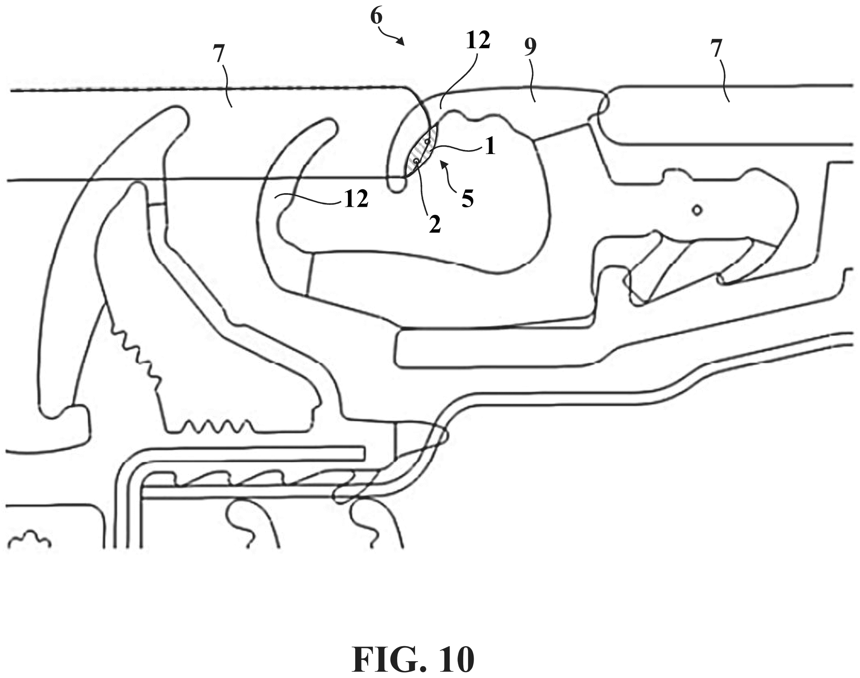

As shown in FIG. 6, the heating seal strip 5 is arranged for use in a door sealing strip assembly 6. In some embodiments, the sealing body 9 may define a bulb 11, and the heating seal strip 5 may be disposed within the bulb 11 along a length direction for door deicing; as shown in FIG. 7, the heating seal strip 5 is arranged on for use in a trunk sealing strip along the length direction for trunk deicing; as shown in FIG. 8, the heating seal strip 5 is arranged on for use in a frameless door top strip and for use in a door frame strip along the length direction for deicing the top of the side window glass 7 of for use in a frameless door. As shown in FIGS. 9 and 10, the heating seal strip 5 is arranged on for use in a frameless door pillar strip along the length direction for deicing the side of the side window glass 7 of the frameless door.

Although embodiments of the present application have been described in conjunction with the accompanying drawings, those skilled in the art may make modifications and variations without departing from the spirit and scope of the present application, and such modifications and variations fall within the scope defined by the appended claims.

## Claims

1. A sealing strip assembly for automobiles, **characterized by** comprising:
a sealing body;
a heating seal strip coupled to the sealing body, the heating seal strip comprising:
a conductive polymer;
two conductor wires provided at intervals inside the conductive polymer, with one end of each of the two conductor wires configured to be connected to a positive electrode and a negative electrode of a power supply, respectively; and
an insulating layer configured to wrap the exterior of the conductive polymer.

2. The sealing strip assembly according to claim 1, **characterized in that** the conductor wires are metal wires.

3. The sealing strip assembly according to claim 1, **characterized in that** a resistance of the conductive polymer increases with a rise in temperature.

4. The sealing strip assembly according to claim 1, **characterized in that** the insulating layer is a rubber layer or an insulating coating.

5. The sealing strip assembly according to claim 1, **characterized in that** the conductive polymer, the two conductor wires and the insulating layer are of an integrally formed structure.

6. The sealing strip assembly according to claim 1, **characterized by** further comprising:
the power supply connected to one end of each of the two conductor wires;
a switch disposed between the power supply and the conductor wires, wherein the switch is configured to control energization of the two conductor wires.

7. The sealing strip assembly according to claim 1, **characterized in that** the heating seal strip is of an integral structure along the length direction of the sealing strip assembly.

8. The sealing strip assembly according to claim 1, **characterized by** further defining a decorative trim member coupled to the sealing body, wherein the heating seal strip is fixedly mounted to the decorative trim member along the length direction.

9. The sealing strip assembly according to claim 1, **characterized in that** the sealing body further defines a sealing lip capable of abutting the heating seal strip, with the sealing lip configured to seal a side window glass.

10. A sealing strip assembly for automobiles, **characterized by** comprising:
a sealing body defining a bulb; and
a heating seal strip disposed within the bulb, the heating seal strip comprising:
a conductive polymer; and
two conductor wires provided at intervals inside the conductive polymer, with an end of one of the two conductor wires configured to be connected to a positive electrode and an end of the other of the two conductor wires configured to be connected to a negative electrode of a power supply, and
wherein the bulb acts as an insulating layer configured to enclose the conductive polymer.

11. The sealing strip assembly according to claim 10, **characterized in that** the conductive polymer, the two conductor wires and the insulating layer are of an integrally formed structure.

12. The sealing strip assembly according to claim 10, **characterized in that** the heating seal strip is of an integral structure along the length direction of the sealing strip assembly.

13. A sealing strip assembly for automobiles, **characterized by** comprising:
a sealing body; and
a heating seal strip coupled to the sealing body configured to form a sealing lip, the heating seal strip comprising:
a conductive polymer; and
two conductor wires provided at intervals inside the conductive polymer, with an end of one of the two conductor wires configured to be connected to a positive electrode and an end of the other of the two conductor wires configured to be connected to a negative electrode of a power supply.

14. The sealing strip assembly according to claim 13, **characterized in that** the heating seal strip is of an integral structure along the length direction of the sealing strip assembly.
